Europäisches Patentamt

European Patent Office

Office européen des brevets

(11) Publication number: **0 238 562 B1**

# EUROPEAN PATENT SPECIFICATION

(45) Date of publication of patent specification: **25.08.93**  (51) Int. Cl.⁵: **A01N 63/02**

(21) Application number: **86905683.8**

(22) Date of filing: **02.10.86**

(86) International application number:
**PCT/AU86/00285**

(87) International publication number:
**WO 87/01910 (09.04.87 87/08)**

The file contains technical information submitted
after the application was filed and not included in
this specification

(54) **BIOLOGICAL CONTROL OF MUSHROOM FLIES.**

(30) Priority: **03.10.85 AU 2736/85**

(43) Date of publication of application:
**30.09.87 Bulletin 87/40**

(45) Publication of the grant of the patent:
**25.08.93 Bulletin 93/34**

(84) Designated Contracting States:
**GB**

(56) References cited:
**US-A- 4 615 883**

**Journal of Nematology, 17(3), 363-366 1985,
"Susceptibility of the Carrot Weevil
(Coleoptera; Curculionidae) to Steinernema
feltiae,S. bibionis and Heterorhabditis
heliothidis", G. Belair and G.Biovin**

(73) Proprietor: **ECOGEN-BIO INC.
2005 Cabot Boulevard West
Langhorne, Pennsylvania 19047(US)**

(72) Inventor: **SMITH, Donald, Robert, John
40 Warialda Street
Kogarah, NSW 2217(AU)**
Inventor: **THIELE, Dennis, Robert
40 Kirby Street
Rydalmere, NSW 2116(AU)**

(74) Representative: **Bannerman, David Gardner et
al
Withers & Rogers 4 Dyer's Buildings Holborn
London, EC1N 2JT (GB)**

Note: Within nine months from the publication of the mention of the grant of the European patent, any person
may give notice to the European Patent Office of opposition to the European patent granted. Notice of opposition
shall be filed in a written reasoned statement. It shall not be deemed to have been filed until the opposition fee
has been paid (Art. 99(1) European patent convention).

Nematologica, 31 (1985) 100-108 "Efficacy of Entomogenous Nematodes Steinernema Spp, Against Clearwing Moths, Synanthedon Spp, in North Italian Apple Orchards", K V. Deseo and L.A. Millar

Appl. Ent. Zool. 21(1), 95-108 (1986)"Infectivity and Propagation of Entomogenous Nematodes, Steinernema spp. on the Common Citnrm Spodoptera litura (Lepidoptera; Noctuidae)", E. Kondo and N. Ishibashi

GCRI Ann. Rep. 1981, pp 86 to 101, J.Inv. Path. 1983 no. 42 pp 1-7, SIP Ann. Meeting 1984 pp 16-17, US-A-4615883

## Description

TECHNICAL FIELD

The invention relates to control of mushroom flies by application of the nematode Steinernema bibionis to mushroom growing loci.

BACKGROUND ART

Mushroom flies (sciarids, cecids and phorids) are the major insect pests of commercial mushroom cultivation throughout the world. Yield losses may result directly from fly larvae feeding on mycelia or mushrooms, or indirectly from the adult flies acting as vectors for the introduction of mites and diseases.

The incidence of mushroom fly problems varies between commercial units and geographic regions, and is seasonal with cold winter conditions reducing fly pressure. At times reductions in yield due to mushroom fly infestations may be significant. In Pennsylvania (where 50% of the USA mushroom crop is produced) yield losses attributed to sciarid infestations have been reported to exceed 17% (J. Ecol. Entom. 77, 473; 1984).

Conventional control of mushroom flies relies on good management (in the form of compost pasteurization, fly screening, fumigation of rooms and general good hygiene) and the use of insecticides. The latter may be incorporated into either the compost or casing layer, watered on during cultivation, or applied as a wall or space spray to control adults. These measures can give adequate control if adhered to. However, insecticide resistance problems have been detected and the use of certain pesticides can result in yield reductions.

A number of biological alternatives to insecticides have been sought, including Bacillus thuringiensis and entomopathogenic nematodes. For the latter, the mushroom bed environment is ideal with warm moist conditions being maintained throughout the production cycle. The added advantage of nematodes over other biological controls is that they actively seek the insect pest. Despite this, published results on the use of entomopathogenic nematodes to control mushroom flies have been discouraging. Work by Cantello et al (Proc. Symp. XV. Int. Cong. Entom; 1976) found that the Steinernematid strain DD-136 did not parisitize and thereby control sciarids or phorids. In contrast, Richardson, (Proc. 10th Int. Congr. Plant Protection, 1983 Volume 3), found that both Steinernema feltiae and Heterorhabditis heliothidis would control cecids and sciarids with H. heliothidis at a rate of $1000g^{-1}$ compost being preferred. Unfortunately, at this rate, and with state-of-the-art production and storage, this nematode is not (at present) a commercially viable option.

DESCRIPTION OF THE INVENTION

The present inventors have found that a further nematode species, Steinernema bibionis, is more effective than previously trialed entomopathogenic nematodes and can give control of mushroom flies at a rate which is commerically competitive with current pesticides.

The present invention therefore provides a method for the biological control of mushroom flies which method comprises applying an effective amount of at least one strain of Steinernema bibionis to the site at which control is required. This site usually comprises the mushroom bed.

S. bibionis may be applied to the site at which control is required, by any standard method used in pesticide application. Preferred methods of applying S. bibionis to the site at which control is required include: incorporating S.bibionis into compost forming the mushroom bed; incorporating S. bibionis into the casing layer of the mushroom bed; spraying S. bibionis onto compost contained in or the casing layer of, the mushroom bed; or applying S. bibionis to the mushroom bed when spraying or watering during cultivation.

Preferred strains of S. bibionis for use in the current invention are S. bibionis OTIO/T319 and S. bibionis T319/T319. These strains are taxonomically indistinguishable.

The nomenclature used in this specification to identify the nematode strains and their associated bacterial symbionts are identical to that of R Bedding and R Akhurst (Commonwealth Scientific and Industrial Research Organization - Division of Entomology) from whom the original stocks were obtained.

BEST MODES OF CARRYING OUT THE INVENTION

According to the invention Steinernema bibionis is preferably applied at a rate of at least $10^5 m^{-2}$. More preferably the rate of application is $5x10^5 m^{-2}$. Most preferably the rate of application is $10^6 m^{-2}$. Minimum

wastage of nematodes will occur if they are applied to those areas of the mushroom bed where fly larvae are concentrated. Thus for the shelf cultivation method nematodes may be sprayed or watered on as a band around the edges and ends of each shelf.

The nematodes used in the present invention may be produced, stored and transported in commercial quantities as described in our international patent applications published under numbers WO86/01074 and WO85/03412.

Currently the most preferable form of storing, packaging and transporting the nematodes is in a 1:1 mixture with an adsorbant, e.g., charcoal. This mixture may then be mixed with tap water prior to application.

The following examples serve to further describe the present invention and illustrate the advantages of the use of S. bibionis over current chemical control options. They should not be considered as limiting on the scope of the present invention.

EXAMPLE 1

Selection of Nematode:

Five nematode stocks were screened against two different sciarid species in small compost pot trials at a concentration of $1000g^{-1}$ compost. The results, calculated as a percentage reduction of adult emergents in comparison to the control are set forth in Table 1.

TABLE 1

| Nematode | L. auripila % | L. mali % |
|---|---|---|
| H. heliothidis T327 | 0 | 0 |
| S. bibionis OTIO/T319 | 79 | 60 |
| S. feltiae (Agriotos) | 50 | 0 |
| S. feltiae (A11) | 0 | 0 |
| S. feltiae (Mexican) | 60 | 20 |

From these results it was clear that S. bibionis was superior against the Lycoriella sp. and was in sharp contrast to results reported by Richardson (1983) which showed that H. heliothidis gave the best control of both the cecidiomyiid fly Heteropeza pygmaea and the sciarid L. aurilpa at a concentration of $1000g^{-1}$.

EXAMPLE 2

Dose Response for 3 Nematode Species against L. mali

The three nematodes, S. bibionis (OTIO-T319), S. feltiae (Mexican) and H. heliothidis (T327) were applied to mushroom compost to give final concentrations of 10, 31.6, 100, 316.2, $1000g^{-1}$. A fixed number of L. mali larvae were added to each pot. After 5 days the compost samples were mist extracted and the number of live larvae and pupae were noted along with the presence or absence of parasitized larvae. The results are set out in Table 2.

## TABLE 2

| Dose (Nos of Nematodes per gram Compost) | Parasitised Larvae Recovered | *Mean No Living Larvae & Pupae (2 replicates) |
|---|---|---|
| Control (No Nematodes added) | No | 8 |
| S. bibionis (OTIO/T319) | | |
| 10 | Yes | 8 |
| 31.6 | Yes | 2 |
| 100 | Yes | 3 |
| 316.2 | Yes | 0 |
| 1000 | Yes | 0 |
| S. feltiae (Mex) | | |
| 10 | No | 10 |
| 31.6 | Yes | 8.5 |
| 100 | Yes | 9.5 |
| 316.2 | Yes | 7.0 |
| 1000 | Yes | 4.5 |
| H. heliothidis (T327) | | |
| 10 | Yes | 11 |
| 31.6 | Yes | 8.5 |
| 100 | No | 4.5 |
| 316.2 | Yes | 3.5 |
| 1000 | Yes | 2.5 |

*Results have been corrected for extraction efficiency as per controls.

From these results it is again clear that S. bibionis offers the best prospect for control with complete control of larvae being found at 316 nematodes/g of compost. H. heliothidis showed significant reductions in numbers of larvae. As the doses increased however there were residual live larvae at the highest doses in contrast to the S. bibionis. In this assay the S. feltiae (Mexican) showed little reduction in live larvae except at the highest dose.

EXAMPLE 3

Dose response for three bibionis strains against L. mali.

Three strains of S. bibionis and the Mexican strain of S. feltiae were screened for infectivity against L. mali larvae in 300ml pots of casing mixture. Fifty gram samples of standard casing were treated with nematodes at dosages as described in Example 2. Four replicates of each dose/strain were used with 10 advanced instar larvae being allocated to each pot. An additional 5 untreated pots served as controls.

All samples were mist extracted in 2 groups of 2 replicates each after 5 days and the numbers of live and parasitized larvae scored. The results which are set out in Table 3 below.

## TABLE 3

| Dose (Nos of Nematodes per gram Compost) | Parasitised Larvae Recovered | *Mean No Living Larvae & Pupae (2 replicates) |
|---|---|---|
| Control (No Nematodes added) | No | 19.2 |
| S. bibionis (T319) | | |
| 10 | Yes | 16.6 |
| 31.6 | Yes | 4.2 |
| 100 | Yes | 4.2 |
| 316.2 | Yes | 0 |
| 1000 | Yes | 0 |
| S. bibionis (OTIO) | | |
| 10 | No | 8.3 |
| 31.6 | Yes | 4.2 |
| 100 | Yes | 0 |
| 316.2 | Yes | 14.6 |
| 1000 | Yes | 2.1 |

*Results corrected for extraction efficiency as per controls.

S. <u>bibionis</u> (T362)

| | | |
|---|---|---|
| 10 | Yes | 12.5 |
| 31.6 | Yes | 12.5 |
| 100 | Yes | 14.6 |
| 316.2 | Yes | 8.3 |
| 1000 | Yes | 8.3 |

S. <u>feltiae</u> (MEX)

| | | |
|---|---|---|
| 10 | Yes | 29.2 |
| 31.6 | No | 10.4 |
| 100 | No | 16.6 |
| 316.2 | Yes | 14.6 |
| 1000 | No | 8.3 |

Aside from an anomalous result In one of the S. bibionis (OTIO) replicates, the results are in broad agreement with earlier trials and indicate that the bibionid strains of <u>Steinernema</u> are potential bioinsecticides for the control of sciarid flies.

EXAMPLE 4

Small laboratory trial of Nematodes:

The insecticide chlorfenvinphos (@ 200ml of 500g/l concentrate per 100m$^2$) and 4 dose rates of S. bibionis were compared in the laboratory using 61 x 38cm trays of mushroom bed. These held 16kg of compost each and were spawned and cased in the standard manner. Sciarid flies were released into the culture room 3 days post spawning and again at 3 days post casing.

Nematodes were applied to the casing surface at rates equivalent to $1.35 \times 10^5$, $2.70 \times 10^5$, $5.40 \times 10^5$ and $1.08 \times 10^6$ nematodes m$^{-2}$. Each dose was replicated twice and there were an additional 2 chlorfenvinphos treated control trays.

Mushrooms were harvested regularly (daily during peak flush) and weighed. The results are given in Table 4 and indicate that the use of S. bibionis even at low doses, results in sufficient protection from sciarid attack to give equivalent, or slightly better, yields than conventional chemical control methods.

TABLE 4

| Treatment | Cumulative Yield (kg) | | Total (kg) |
|---|---|---|---|
| | Rep. A | Rep B | |
| chlorfenvinphos | 2.960 | 4.290 | 7.250 |
| $1.35 \times 10^5$ nematodes/m$^2$ | 4.220 | 4.000 | 8.220 |
| $2.7 \times 10^5$ | 5.020 | 4.360 | 9.380 |
| $5.4 \times 10^5$ | 4.550 | 3.790 | 8.340 |
| $1.08 \times 10^6$ | 4.180 | 4.490 | 8.670 |

Additional sampling of the compost/casing revealed that infective nematodes could be recovered throughout the trial (77 days post casing), but that a few sciarids escaped parisitism. This resulted in limited emergence of adults with a maximum of 14 flies in week 7 post casing.

EXAMPLE 5

Semi field trial of Nematodes

A larger trial was set up to test the effectiveness of S. bibionis at two rates in controlling an L. mali infestation under field conditions. The compatibility of nematodes with currently used nematicides (fenamiphos) and fungicides (thiabendazole) was also tested along with untreated controls and the standard insecticide treatment chlorfenvinphos.

The mushroom used was a new variety of the standard species Agaricus bisporus which is usually susceptible to sciarid damage. A total of 24, 61 x 61cm trays were used, 6 replicates at each major treatment and 3 replicates each for the combined treatments. After spawning releases of adult L. mali were made into the shed prior to casing and the application of the various treatments. The two rates of nematode application were one and five million m$^{-2}$.

Throughout the trial yield data was collected and at various times samples were taken and mist extracted to check for survival and infectivity of the nematodes and also for parasitized larvae.

The yield figures were not as high as expected mainly because of contamination at the time of sciarid release, the presence of verticillum and general difficulties with growing a new strain of A. bisporus.

In a commercial situation it is expected that the use of S. bibionis for the control of mushroom flies will result in improved mushroom yields compared with conventional pesticides.

The main points obtained from this trial are as follows:

1) S. bibionis will actively parasitize L. mali larvae in mushroom compost as is evidenced by the extraction of parasitized larvae throughout the trial at both application rates.

2) S. bibionis will survive well and remain highly infective in compost under mushroom growing conditions throughout the growing life of the mushroom bed. Nematodes that were extracted at various times during the mushroom cycle were assayed in the laboratory and were shown to be still able to parasitize L. cuprina larvae.

3) S. bibionis may not be able to control very high numbers of sciarid larvae as live 3rd instar larvae were found amongst large numbers of parasitized ones. The level of sciarid infestation in this trial is probably a lot higher than that likely to be encountered in any good mushroom growing operation where hygiene levels are high.

4) Neither the nematicide fenamiphos nor the fungicide thiabendazole when used at the recommended rates appear to have any adverse effects on the nematodes.

5) S. bibionis has provided satisfactory control of a moderate L. mali infestation in the mushroom unit at an application rate of $10^6$ m$^{-2}$ and appears to be compatible with mushroom cultivation practices.

In this example sciarid control was achieved at an application rate of $10^6$ m$^{-2}$ in the casing layer.

INDUSTRIAL APPLICABILITY

The method of the invention can be applied to the commercial growing of mushrooms to minimise damage and increase yields.

**Claims**

1. A method of biologically controlling mushroom flies in commercial mushroom cultures which method comprises applying at least one strain of Steinernema bibionis to the site at which control is required.

2. The method as defined in claim 1 wherein the strain is S. bibionis OTIO/T319 or T319/T319.

3. The method as defined in claim 1 or claim 3, wherein S. bibionis is applied at a rate of at least $10^5$ m$^{-2}$.

4. The method is defined in claim 3, wherein the rate is $5 \times 10^5$ m$^{-2}$.

5. The method as defined in claim 3, wherein the rate is $10^6$ m$^{-2}$.

6. The method as defined in any one of claims 1 to 5, wherein the mushroom flies are sciarids, cecids or phorids.

7.  The method as defined in claim 1 wherein the site of control comprises a mushroom bed and S. bibionis are incorporated into compost forming the mushroom bed.

8.  The method as defined in claim 7, further comprising incorporating a fungicide and/or a nematicide which does not inhibit the activity of S. bibionis into the compost.

9.  The method as defined in claim 8, wherein the fungicide is thiabendazole and the nematicide is fenamiphos.

10. The method as defined in claim 7, wherein S. bibionis are incorporated into the casing layer of the mushroom bed.

11. The method as defined in claim 7, wherein S. bibionis are sprayed onto compost contained in or onto the casing layer of the mushroom bed.

12. The method as defined in claim 7, wherein S. bibionis are applied to the mushroom bed when spraying or watering during cultivation.

13. The method as defined in claim 7, wherein S. bibionis are applied to those areas of the mushroom bed where fly larvae are concentrated or are known to concentrate.

14. The method as defined in claim 7, wherein the mushrooms are shelf cultivated and S. bibionis are sprayed or watered on as a band around the edges and ends of each shelf.

**Patentansprüche**

1.  Verfahren zur biologischen Kontrolle/Bekämpfung von Pilzfliegen in kommerziellen Pilzkulturen, welches Verfahren umfaßt die Anwendung wenigstens eines Stammes von Steinerenema bibionis an dem Ort, an welchem die Bekämpfung erforderlich ist.

2.  Verfahren nach Anspruch 1, dadurch gekennzeichnet, daß der Stamm S. bibionis OTIO/T319 oder T319/T319 ist.

3.  Verfahren nach Anspruch 1 oder 2, wobei S. bibionis angewendet wird in einer Rate von wenigstens $10^5$ $m^{-2}$.

4.  Verfahren nach Anspruch 3, wobei die Rate 5 x $10^5$ $m^{-2}$ ist.

5.  Verfahren nach Anspruch 3, wobei die Rate $10^6$ $m^{-2}$ ist.

6.  Verfahren nach einem der Ansprüche 1 bis 5, wobei die Fliegenpilze Sciarids, Cecids oder Phorids sind.

7.  Verfahren nach Anspruch 1, wobei Ort der Bekämpfung ein Pilzbett ist, und S. bibionis eingeführt werden in den das Pilzbett bildenden Kompost.

8.  Verfahren nach Anspruch 7, wobei ferner ein Fungizid und/oder ein Nematicid angewendet wird, der das Eingeben von S. bibionis in den Kompost nicht behindert.

9.  Verfahren nach Anspruch 1, wobei das Fungizid Thiabendazol und das Nematicid Fenamiphos sind.

10. Verfahren nach Anspruch 7, wobei S. bibionis eingebracht werden in die umhüllende Lage des Pilzbettes.

11. Verfahren nach Anspruch 7, wobei S. bibionis gesprüht wird auf den Kompost, der in dem Pilzbett enthalten ist oder auf die umhüllende Lage.

**12.** Verfahren nach Anspruch 7, wobei S. bibionis angewendet werden auf das Pilzbett beim Sprayen oder Wässern während der Kultivation.

**13.** Verfahren nach Anspruch 7, wobei S. bibionis angewendet werden auf solche Gebiete des Pilzbettes, wo Fliegenlarven konzentriert sind, oder wo ihre Konzentration zu erwarten ist.

**14.** Verfahren nach Anspruch 7, wobei die Pilze auf Brettergestellen oder Regalen kultiviert werden und S. bibionis aufgesprüht oder mit Wasser aufgebracht werden als ein Band rundherum um die Kanten und Enden jedes Regalbrettes o. dgl.

**Revendications**

**1.** Procédé de maîtrise biologique des mouches des champignons, dans les cultures industrielles de champignons, procédé qui consiste à appliquer au moins une souche de Steinernema bibionis sur le site où l'on souhaite effectuer la maîtrise.

**2.** Procédé selon la revendication 1, dans lequel la souche est S. bibionis OTIO/T319 ou T319/T319.

**3.** Procédé selon la revendication 1 ou 3, dans lequel S. bibionis est appliqué en une quantité d'au moins $10^5$ m$^{-2}$.

**4.** Procédé selon la revendication 3, dans lequel cette quantité est de $5.10^5$ m$^{-2}$.

**5.** Procédé selon la revendication 3, dans lequel cette quantité est de $10^6$ m$^{-2}$.

**6.** Procédé selon l'une quelconque des revendications 1 à 5, dans lequel les mouches des champignons sont les sciarides, les cécides ou les phorides.

**7.** Procédé selon la revendication 1, dans lequel le site de maîtrise comprend un lit de champignons, S. bibionis étant icorporé dans le compost formant le lit de champi-gnons.

**8.** Procédé selon la revendication 7, qui consiste en outre à incorporer dans le compost un fongicide et/ou un nématicide qui n'inhibe pas l'activité de S. bibionis.

**9.** Procédé selon la revendication 8, dans lequel le fongicide est le thiabendazole et le nématicide est le fénamiphos.

**10.** Procédé selon la revendication 7, dans lequel S. bibionis est incorporé dans la couche de gobetage du lit de champignons.

**11.** Procédé selon la revendication 7, dans lequel S. bibionis est pulvérisé sur le compost contenu dans le lit de champignons, ou sur la couche de gobetage du lit de champignons.

**12.** Procédé selon la revendication 7, dans lequel S. bibionis est appliqué sur le lit de champignons lors de la pulvérisation ou de l'arrosage en cours de culture.

**13.** Procédé selon la revendication 7, dans lequel S. bibionis est appliqué sur les zones du lit de champignons où les larves des mouches sont concentrées, ou encore où on sait que les larves de mouches se concentrent.

**14.** Procédé selon la revendication 7, dans lequel les champignons sont cultivés en étagères, et S. bibionis est pulvérisé ou arrosé sous forme d'une bande autour des bords et des extrémités de chaque étagère.